# EUROPÄISCHE PATENTANMELDUNG

(11) **EP 2 112 023 A2**
(43) Veröffentlichungstag der Anmeldung: **28.10.2009**
(21) Anmeldenummer: 09005551.8
(22) Anmeldetag: 21.04.2009
(51) Int. Cl.: B60R 5/00

(54) **Flexibler, langgestreckter, sackförmiger Behälter**

(30) Priorität: 26.04.2008 DE 202008005824 U
(71) Anmelder: Dr. Haubitz GmbH & Co. KG, 42699 Solingen (DE)
(72) Erfinder: Schirmer, Werner, 42719 Solingen (DE); Zinsser, Bernhard, 42327 Wuppertal (DE)
(74) Vertreter: Priebisch, Rüdiger

(57) **Zusammenfassung**

Um das Verstauen eines leeren, flexiblen, langgestreckten, sackförmigen Behälters (2) durch Aufrollen in mehrere flach übereinander liegende Einzellagen (15) zu einem kompakten, flachen Paket zu erleichtern, ist am Behälter (2) eine Falthilfe (14) in Form einer Versteifung der ersten Einzellage (15) angebracht, welche zumindest die Länge (L15) der ersten Einzellage (15) so festlegt, dass nach dem Aufrollen genau die gesamte Länge (L2) des Behälters (2) zusammengelegt ist. Die Erfindung ist besonders geeignet zum Verstauen eines Skisacks (2) in der Öffnung einer Fahrzeugwand mit Hilfe eines Montagerahmens (9).

## Beschreibung

Die Erfindung bezieht sich auf einen flexiblen, langgestreckten, sackförmigen Behälter, der in leerer Form durch Aufrollen in mehrere flach übereinander liegende Einzellagen kompakt zusammenlegbar ist.

Die Erfindung wird an Hand eines sog. Skisacks für Kraftfahrzeuge erläutert. Ein solcher Skisack ist an seinem offen Ende an einem Montagerahmen befestigt, der in einer Öffnung einer quer zur Fahrtrichtung verlaufenden Fahrzeugwand eingesetzt werden kann. Diese Fahrzeugwand trennt einen vorderen Fahrgastraum von einem hinteren Laderaum. Die Anordnung ermöglicht, von dem Laderaum her Skier oder dergleichen durch die Fahrzeugwand hindurch in den Skisack hinein zu verstauen. Dabei umhüllt der entfaltete Skisack die in den Fahrgastraum ragenden Skier. Die Befestigung eines solchen Skisacks ist Gegenstand des älteren Deutschen Gebrauchsmusters 20 2008 002 122.7 der Anmelderin.

Bei Nichtgebrauch wird der leere Skisack durch eine Art Aufrollen in mehrere, flach übereinander liegende Einzellagen zusammengelegt und dann als flaches Paket in der Fahrzeugwand verstaut. Bisher wird hierzu ein Skisack flach und ausgestreckt hingelegt, dann ein bodenseitiger Endabschnitt, etwa eine Handbreit, umgeschlagen, dann dieses Umschlagen nach Art eines Aufrollens so lange wiederholt, bis die gesamte Länge des Skisacks in vielfach umgeschlagener und gewissermaßen flach aufgerollter Form in den fest mit dem Skisack verbundenen, umlaufenden Befestigungsrahmen gelegt werden kann.

Dieser vorgenannte Ablauf erfordert durch das wiederholte Umschlagen des Skisacks eine geschickte Handhabung, um den Skisack schließlich raumsparend und insbesondere möglichst flach im Rahmen verstauen zu können, der dann in der Öffnung der Fahrzeugwand gelagert wird.

Aus der DE 195 19 258 C2 ist es ab Zeile 30 der ersten Spalte der einleitenden Beschreibung einerseits schon bekannt, bei einem gattungsgemäßen Behälter sogenannte Abnäher vorzusehen, die dem Benutzer als Falthilfe dienen sollen, um den Behälter bei Nichtgebrauch, also im leeren Zustand, gezielt auf ein bestimmtes Packmaß zusammenlegen zu können. Andererseits wird in diesem Dokument zu der darin vorgeschlagenen Ausbildung des Behälters ab Zeile 42 der zweiten Spalte ausdrücklich erwähnt, dass der dortige erfindungsgemäße sackartige Behälter derartige Falthilfen regelmäßig nicht benötige, weil er aufgrund des geringen Flächengewichts seiner Gewebebahn auch ziellos auf ein ausreichend kleines Packmaß reduziert werden könne. Insofern weist dieses Dokument wieder weg von der Anordnung einer Falthilfe.

Aus der DE 10 2006 013 023 A1 ist ein sackförmiger Behälter bekannt, dessen effektive Länge zum bzw. beim Gebrauch, also im gefüllten Zustand, durch Fixiermittel verkürzt werden kann. Zur Verkürzung auf die jeweils gewünschte, zu befüllende Länge, auch mit Hilfe von Sollfaltstellen, Anspruch 6, werden als Fixiermittel Reißverschluss, Anspruch 5, Klettverschluss, Ansprüche 13 und 14, oder Druckknöpfe, Anspruch 18, vorgeschlagen.

Aus der DE 82 22 941 U1 ist ein faltbarer, mit einem Reißverschluss versehener Kleidersack bekannt, bei dem zum Zusammenlegen eine zusätzliche, verschließbare Schutzhülle vorgesehen ist. Damit der Kleidersack auf kleinstem Raum zusammengeklappt werden kann, ist eine Stofflage des Kleidersacks an den parallelen Rändern der Schutzhülle befestigt, die gleichzeitig Faltlinien sind.

Aus der US 2004 008 9660 A1 ist ein zusammenlegbarer Behälter bekannt, dessen Ränder gemäß Absatz 19 und Ansprüchen 1, 11, 12, 18 und 19 versteift sein können, z. B. mittels Streifen oder Stäbe, beide aus Metall oder Kunststoff.

Ausgehend von den zuvor geschilderten Gegebenheiten liegt der Erfindung das Bestreben zu Grunde, das Verstauen des langgestreckten, flexiblen Behälters zu erleichtern. Insbesondere soll eine Maßnahme angegeben werden, mittels der nach dem Umschlagen über die gesamte Länge des Behälters zwangsläufig eine räumlich optimale Form des Behälters erreicht wird.

Hierzu schlägt die Erfindung unter Nutzung einer Falthilfe zunächst vor, dass die Falthilfe zumindest die Länge der ersten Einzellage so festlegt, dass nach dem Aufrollen genau die gesamte Länge des Behälters zusammengelegt ist, wobei die Festlegung der Länge durch eine Versteifung der ersten Einzellage vorgenommen ist.

Jeder flexible Behälter mit einer bestimmten oder gewünschten Länge kann zu einer räumlich optimalen Form in der beschriebenen Weise flach zusammengerollt werden. Voraussetzung hierzu ist, dass die Länge der ersten Lage ein ganz bestimmtes Maß hat. Dieses Maß kann durch Ausprobieren ermittelt werden, ist es doch insbesondere abhängig von der Dicke und Steifigkeit des jeweiligen flexiblen Materials. Wird die Restlänge des Behälters über die erste Lage mit ermittelter Länge gerollt und so fort, dann ergibt sich immer eine optimale, flache Form des schließlich praktisch faltenfrei zusammengelegten Behälters.

Ein nach der Erfindung ausgebildeter flexibler Behälter kann folglich schnell und einfach zu einem sehr kompakten, aber die vorhandene Querschnittsfläche voll ausnutzenden Volumen zusammengelegt werden.

Eine Versteifung nach der Erfindung soll ein Durchbiegen der ersten Lage beim Aufwickeln weitgehend vermeiden und kann in sehr unterschiedlicher Art verwirklicht sein:

So kann in einfachster Form die Versteifung der ersten Einzellage in Form von zwei in Längsrichtung, der Wickelrichtung, verlaufenden und fest mit dem Behälter verbundenen Randstreifen aus einem biegesteifen Profil vorgenommen sein. Diese Randstreifen können z. B. insbesondere ein- oder aufgenäht oder mit dem Material des Behälters verschweißt sein. Auch ein nachträgliches Aufbringen auf einen bestehenden Behälter ist möglich, desgleichen eine lösbare Befestigung am Behälter. Über diese steifen Randstreifen kann die Restlänge des Behälters bequem und genau, sozusagen flach, aufgerollt werden.

Eine stabilere Form der Falthilfe in Form einer Versteifung ist erzielt, wenn die Versteifung der ersten Einzellage eine U-Form aufweist. Hierbei kann der U-Steg vorzugsweise parallel zur Wickelachse liegen.

Eine besonders günstige Form ist gegeben, wenn die Versteifung der ersten Einzellage als im Prinzip rechteckiger Rahmen ausgebildet ist.

Die Versteifung an sich kann aus Kunststoff oder Metall, aus einem biegesteifen Draht, auch einem Flachdraht, oder aus einer steifen Folie bestehen. Auch diese können in zweckmäßiger Weise fest oder lösbar mit dem Behälter verbunden sein.

Bei den randseitig liegenden, drahtförmigen Versteifungen und bei einer Folie mit einer mittleren Ausnehmung kann der mittlere, dünnere Abschnitt der ersten Einzellage zur Aufnahme von Schnallen oder dergleichen des Behälters dienen und somit letztendlich auch in diesen oder ähnlichen Fällen eine stets kompakte Raumform sicherstellen.

Besonders in den vorgenannten Fällen kann als Falthilfe zumindest ein Teil eines versteiften Bodens des Behälters dienen. Der Boden oder Bodenteil bestimmt dann mit seiner Länge die Länge der ersten Lage.

Zur bequemen Unterbringung des flach zu einem Paket zusammengerollten Behälters kann vorgesehen werden, dass der Behälter mit seinem offenen Ende mit einem im Querschnitt vergrößerten Abschnitt in einem festen Montagerahmen befestigt ist. Der zusammengelegte Behälter wird dann gewissermaßen konzentrisch innerhalb des vergrößerten Abschnitts gelagert.

Weiterhin kann zur Raumoptimierung vorgesehen sein, dass der Behälter als Doppelseitenfaltensack ausgebildet ist. Dieser fördert die kompakte Zusammenlegung über die gesamte Länge des flexiblen Behälters.

Schließlich kann der Behälter als sog. Skisack und sein Montagerahmen zur vorzugsweise lösbaren Befestigung in der Öffnung einer Fahrzeugwand ausgebildet sein.

Weitere Merkmale und Vorteile der Erfindung sind auch der ein Ausführungsbeispiel darstellenden Zeichnung und deren nachfolgenden Beschreibung entnehmbar.
Fig. 1 zeigt eine Vorrichtung nach der Erfindung in ausgestreckter Form, am Beispiel eines in einer Fahrzeugwand zu befestigenden Skisacks, und zwar gemäß dem Schnitt I - I in Fig. 2.
Fig. 2 zeigt die Ansicht der Vorrichtung in Richtung des Pfeils S in Fig. 1.
Fig. 3 zeigt die Einzelheit A in Fig. 1 in vergrößertem Maßstab.

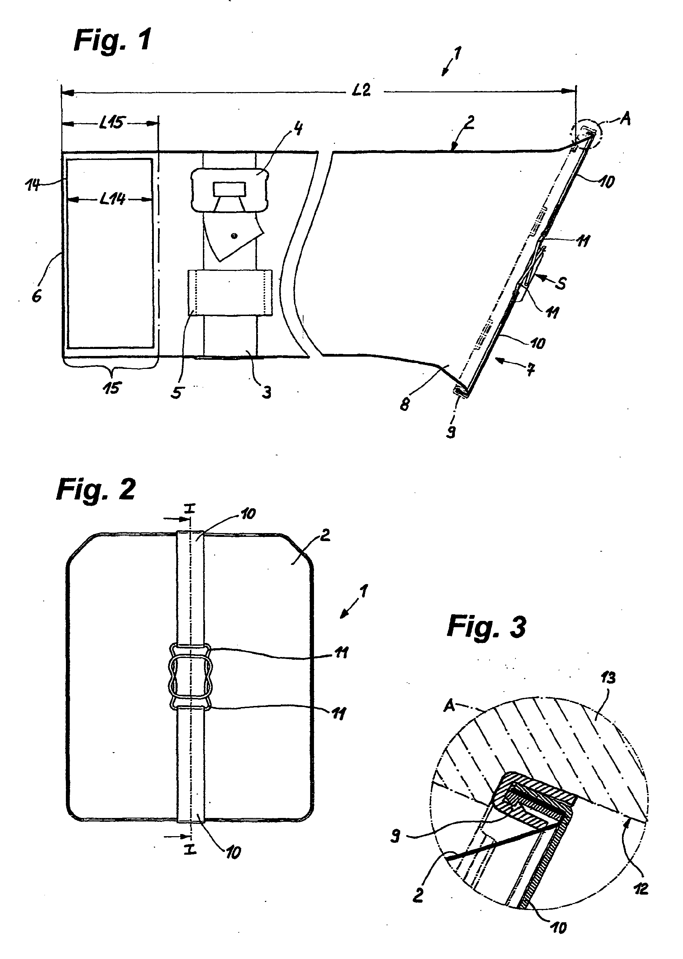

Die Vorrichtung 1 umfasst einen flexiblen sackförmigen Behälter in Form eines Skisacks 2, von dem hier ein Spanngurt 3, eine Schnalle 4 und eine Schlaufe 5 sichtbar sind. Die Form und Ausstattung des Skisacks 2 sind jedoch nahezu beliebig. Sein etwa rechteckiger Querschnitt ist in Fig. 2 erkennbar. Der Skisack 2 hat einen geschlossenen Boden 6 und ist an seinem offenen Ende 7 mit einem im Querschnitt vergrößerten Abschnitt 8 versehen, der in einem festen Montagerahmen 9 gelagert ist. Im Montagerahmen 9 sind noch zwei etwa senkrechte Spannbänder 10 befestigt, die über zwei Bügel 11 miteinander lösbar verbunden sind, vergleiche Fig. 2.

Der Montagerahmen 9 ist in einer gestuften Öffnung 12 einer angedeuteten Fahrzeugwand 13 so befestigt, dass auf den Skisack 2 einwirkende horizontale Kräfte sicher in die Fahrzeugwand 13 abgeleitet werden, vergleiche Fig. 3.

Bei Nichtgebrauch soll der Skisack 2 samt seinem Montagerahmen 9 innerhalb der Öffnung 12 der Fahrzeugwand 13 gelagert werden. Hierzu wird er von seinem bodenseitigen Ende her in eine gewissen Anzahl von Lagen sozusagen flach aufgerollt. Die Anzahl dieser parallelen Lagen ist abhängig von der Gesamtlänge L2 des Skisacks 2. Damit der Skisack 2 dabei über seine Gesamtlänge L2 akkurat und möglichst kompakt zusammengelegt wird, ist nahe dem Boden 6 eine Falthilfe in Form eines rechteckigen Rahmens 14 aus Draht am Skisack 2 angebracht, z B. eingenäht oder eingeschweißt.

Der Rahmen 14 hat eine ganz bestimmte Länge L14, welche die Länge L 15 der ersten Lage 15 definiert. Die Länge L15 ist durch Materialdicke und evtl. Nähte oder dergleichen etwas größer als die Länge L 14. Die Länge L14 bzw. L15 ist in Abstimmung mit der vorhandenen Gesamtlänge L2 so gewählt, dass nach straffem, flachen Aufrollen des Skisacks 2 über seine Gesamtlänge L2 nach rechts das sich schließlich ergebende flache Wickelpaket in den Montagerahmen 9 aufgenommen und innerhalb der Öffnung 12 der Fahrzeugwand 13 gelagert werden kann.

Ein dermaßen sehr kompakt in der Fahrzeugwand 13 verstautes Paket kann bei Bedarf leicht und schnell wieder abgewickelt werden, wodurch der Skisack 2 zur Aufnahme von Skiern oder dergleichen sofort wieder zur Verfügung steht.

### Bezugszeichenliste:

- 1: Vorrichtung
- 2: Skisack
- 3: Spanngurt
- 4: Schnalle
- 5: Schlaufe
- 6: Boden
- 7: offenes Ende
- 8: Abschnitt
- 9: Montagerahmen
- 10: Spannband
- 11: Bügel
- 12: Öffnung
- 13: Fahrzeugwand
- 14: Rahmen
- 15: erste Lage
- A: Einzelheit
- L2: Länge von 2
- L14: Länge von 14
- L15: Länge von 15
- S: Richtung

## Patentansprüche

1. Flexibler, langgestreckter, sackförmiger Behälter (2), der in leerer Form durch Aufrollen in mehrere flach übereinander liegende Einzellagen kompakt zusammenlegbar ist, indem am Behälter (2) eine Falthilfe (14) angebracht ist, **dadurch gekennzeichnet, dass** die Falthilfe (14) zumindest die Länge (L15) der ersten Einzellage (15) so festlegt, dass nach dem Aufrollen genau die gesamte Länge (L2) des Behälters (2) zusammengelegt ist, wobei die Festlegung der Länge (L15) der ersten Einzellage (15) durch eine Versteifung (14) der ersten Einzellage (15) vorgenommen ist.

2. Behälter nach Anspruch 1**, dadurch gekennzeichnet, dass** die Versteifung der ersten Einzellage in Form von zwei in Längsrichtung verlaufenden und fest mit dem Behälter verbundenen Randstreifen aus einem biegesteifen Profil vorgenommen ist.

3. Behälter nach Anspruch 1, **dadurch gekennzeichnet, dass** die Versteifung der ersten Einzellage eine U-Form aufweist.

4. Behälter (2) nach Anspruch 1**, dadurch gekennzeichnet, dass** die Versteifung der ersten Einzellage (15) als rechteckiger Rahmen (14) ausgebildet ist.

5. Behälter (2) nach einem der Ansprüche 1 bis 4, **dadurch gekennzeichnet, dass** die Versteifung (14) aus Kunststoff oder Metall besteht.

6. Behälter (2) nach einem der Ansprüche 1 bis 5, **dadurch gekennzeichnet, dass** die Versteifung (14) aus einem Draht besteht.

7. Behälter nach Anspruch 6, **dadurch gekennzeichnet, dass** die Versteifung aus einem flachen Draht besteht.

8. Behälter nach einem der Ansprüche 1 bis 5, **dadurch gekennzeichnet, dass** die Versteifung aus einer steifen Folie besteht.

9. Behälter nach Anspruch 8, **dadurch gekennzeichnet, dass** die Folie eine mittige Ausnehmung aufweist.

10. Behälter nach einem der Ansprüche 1 bis 9, **dadurch gekennzeichnet, dass** als Falthilfe zumindest ein Teil des Bodens des Behälters dient.

11. Behälter (2) nach einem der Ansprüche 1 bis 10, **dadurch gekennzeichnet, dass** der Behälter (2) mit seinem offenen Ende (7) mit einem im Querschnitt vergrößerten Abschnitt (8) in einem Montagerahmen (9) befestigt ist.

12. Behälter nach einem der Ansprüche 1 bis 11, **dadurch gekennzeichnet, dass** der Behälter als Doppelseitenfaltensack ausgebildet ist.

13. Behälter (2) nach Anspruch 11 oder nach Anspruch 12 in Verbindung mit Anspruch 11, **dadurch gekennzeichnet, dass** der Behälter als Skisack (2) und sein Montagerahmen (9) zur Befestigung in der Öffnung (12) einer Fahrzeugwand (13) ausgebildet ist.
